# EUROPÄISCHE PATENTSCHRIFT

(11) **EP 2 009 337 B1**
(45) Veröffentlichungstag und Bekanntmachung des Hinweises auf die Patenterteilung: **23.07.2014**
(21) Anmeldenummer: 08011638.7
(22) Anmeldetag: 26.06.2008
(51) Int. Cl.: F28D 7/02, F16L 3/13, F28F 9/013, F28F 1/08, F16L 3/133, F16L 3/223

(54) **Anordnung und Verfahren zur Fixierung von Leitungen**
Assembly and method for fixing pipes
Agencement et procédé de fixation de conduites

(30) Priorität: 26.06.2007 DE 202007009023 U
(43) Veröffentlichungstag der Anmeldung: 31.12.2008
(73) Patentinhaber: AZ Vermögensverwaltung GmbH & Co. KG, 61276 Weilrod (DE)
(72) Erfinder: Zimmermann, Dirk, 61276 Weilrod (DE)
(74) Vertreter: Thomas, Matthias

(56) Entgegenhaltungen:
- EP-A1- 1 174 747
- AT-U1- 7 834
- DE-A1- 19 604 974
- US-A- 4 991 801
- US-A- 5 016 706
- US-A- 5 319 837
- US-B1- 6 311 936

## Beschreibung

Die Erfindung betrifft eine Anordnung zur Fixierung von Leitungen, die weitgehend universell einsetzbar ist. Sie betrifft ebenso ein Verfahren zur Fixierung von Leitungen mithilfe der Anordnung und die Verwendung der Anordnung.

Es ist bekannt, Leitungen mit Rohrschellen zu befestigen. Ebenso ist bekannt, zumindest einzelne Leitungen mit Bandagen an geeigneten Orten zu befestigen.

Sollen Leitungen mit Rohrschellen oder Bandagen befestigt werden, ist immer auch ein geeigneter Befestigungsort (Mauerwerk, Holzbalken, Konstruktionsteile und dergleichen) erforderlich. Sind Befestigungsorte nicht in der notwendigen Entfernung verfügbar, müssen Leitungen stabiler ausgelegt werden, als technisch notwendig.

Müssen mehrere Leitungen in etwa parallel verlaufend geführt werden, muss entweder eine Vielzahl von Rohrschellen gesetzt werden oder es sind Mehrfachrohrschellen in spezifischen Abmessungen notwendig. Solcher Art Rohrschellen sind aufwendig.

Es ist auch bekannt, Doppelrohrschellen auszuführen, die zwei parallel verlaufende Rohre auf einen Abstand einstellen sollen. Gelegentlich werden diese auch verwendet, eine Mehrzahl parallel verlaufender Leitungen zu befestigen, indem die Rohrschellen versetzt zueinander und jeweils um eine Leitung überlappend angeordnet werden. Dies ist ebenso aufwendig

Es ist schon länger bekannt, klammerförmige Rohrschellen aus Federwerkstoffen zu verwenden, die eine Leitung nicht vollständig umschließen und in die durch elastische Verformung eine zu fixierende Leitung eingedrückt werden kann. US 4 991 801 A zeigt Varianten einer solchen Lösung.

Nach einem Vorschlag in DE 196 04 974 A1 soll es möglich sein, Abstandshalter für eine endliche Zahl parallel und beabstandet zueinander verlaufender flexibler Kunststoffrohre herzustellen, die aus thermoplastischem Kunststoff bestehen und unter Wärmeeinwirkung in ihre Form gebracht werden sollen. Der wesentlichste Nachteil dieser Anordnung ist, dass die thermoplastischen Abstandshalter nur einen eingeschränkten Temperatureinsatzbereich haben können, weshalb sie für eine Verwendung bei erhöhten Temperaturen ungeeignet sind und deshalb ausschließlich in Estrich eingebettet zur Fixierung von Heizmatten für Fußbodenheizungen zum Einsatz kommen können.

Nach einem Vorschlag in EP 1 174 747 A1 soll es möglich sein, thermoplastische Abstandshalter der oben bezeichneten Art so auszuführen, dass sie durch Urformen herstellbar sind, verkettbar sind und beliebige Formen für die Ausnehmungen haben können. Am eingeschränkten Einsatzbereich ändert sich gegenüber dem oben beschriebenen Vorschlag nichts.

In US 5 319 837 A ist ein kammförmiger Abstandshalter beschrieben, bei dem im aufnehmenden Teil eine Mehrzahl u-förmiger Vertiefungen vorgesehen ist, in die jeweils Leitungen eingelegt werden können. Nach dem Einlegen wird ein Verschlussteil übergeschoben, das bei Erreichen der Endstellung in dafür vorgesehene Mittel einrastet. Damit ist ein versehentliches Öffnen des Abstandshalters ausgeschlossen. Die vorgeschlagenen Abstandshalter sind materialintensiv. Außerdem müssen zwei zueinander kompatible Teile erzeugt werden, und es ergibt sich die Notwendigkeit einer umfangreichen Vorratshaltung hinsichtlich Baugrößen und -formen.

Ein Vorschlag aus US 5 016 706 A sieht einen Abstandshalter in der Form eines Drahtbügels vor, der im Bereich, in dem Leitungen beabstandet zueinander aufliegen sollen, wellenförmig gestaltet ist und an seinen Enden rechtwinklig abgebogene Endstücke zur Befestigung an einer Fläche hat. Ein Sicherungsbauteil ist ebenfalls im Auflagebereich wellenförmig profiliert und mit seinen Enden jeweils in Ausnehmungen der Rastelemente an den Endstücken eingehängt. Dieser einfach aufgebaute Abstandshalter, der eine Anordnung zur Fixierung von Leitungen nach dem Oberbegriff des Anspruchs 1 darstellt, hat den Nachteil, dass Abstandsänderungen zwischen den Leitungen nicht ausgeschlossen werden können. Die Position der an den Endstücken des Abstandshalters angeordneten Rastelemente muss zudem stets an die Rohrdurchmesser angepasst sein.

Die oben beschriebenen Abstandshalter sind zum Fixieren von Leitungsbündeln, wie sie typischerweise in Leitungsbündeln für Wärmetauscher notwendig sind, ungeeignet. Soweit es sich um thermoplastische Teile handelt, sind nur Bauteile aus temperaturbeständigen Kunststoffen geeignet. Die zumeist zylindrischen Wickel mit spiralförmig verlaufenden Leitungen können darüber hinaus in diesen Abstandshaltern nicht fixiert werden, da diese einen zusätzlichen Träger erfordern.

Nach einem Vorschlag in AT 007 834 U1 ist deshalb zur Ausbildung eines entsprechenden Wickels zunächst ein Träger vorgeschlagen, der als Zylinder aus einem metallischen Gitter ausgeführt ist und auf den speziell gestaltete Schellen formschlüssig aufgesteckt werden können, wobei diese dem gewünschten Leitungsverlauf entsprechend angeordnet sein können. Die Schellen sind dazu in ihrem Basisbereich mit mehreren beabstandet angeordneten Ausnehmungen versehen, sodass sie in verschiedenen Positionen in das Gitter eingesetzt werden können. Die Herstellung der entsprechenden Wickel verursacht einen erheblichen Arbeits- und Materialaufwand. Bei der Montage sind Fehlermöglichkeiten vorhanden, die bei der Fertigung von Wärmetauschern zu aufwendigen Nacharbeiten zwingen können. Ferner ist durch den metallischen Zylinder und die Vielzahl von Schellen ein unnötiger Materialaufwand gegeben, wobei diese Lösung in einem Wärmetauscher aufgrund ihrer Wärmekapazität zusätzliche Trägheit bei Temperaturänderungen bewirkt.

Bei Wellrohren besteht die Möglichkeit, die regelmäßige Abfolge von Wellenbergen und -tälern auch für Befestigungszwecke zu nutzen. Für einen Fall einer Biegung um 180° ist in US 6 311 936 B1 ein brillenförmiges Bauteil aus Blech vorgeschlagen, das ein u-förmig gebogenes Wellrohr aufnehmen kann. Mehrfachanordnungen von Wellrohrleitungen oder spiralförmige Wickel lassen sich mit einem solchen brillenförmigen Element nicht realisieren.

Mithin ist die Befestigung bei Wellrohren oder -schläuchen, die häufig in Verbindung mit Solarkollektoren, bei Gasinstallationen, in Wärmetauschern und dergleichen verwendet werden, nicht zufriedenstellend gelöst. Sofern am Einbauort die Möglichkeit besteht, an sich dafür nicht vorgesehene, aber gerade passende, Rohrschellen zu verwenden, bedarf es keiner besonderen Halteeinrichtungen. Sind Wellrohre oder -schläuche an Orten einzubauen, bei denen die herkömmlichen Befestigungstechniken für Rohrschellen nicht anwendbar sind, steht keine geeignete Befestigungstechnik zur Verfügung. Die mangelnde Eigenstabilität der Wellrohre oder -schläuche erfordert aber gerade eine Unterstützung.

Nach einem Vorschlag in DD 247 965 A1 sind deshalb U-förmig verlaufende Wellrohre mit dem Deckel eines Wärmetauschers fest verbunden, sodass sie frei hängend in den Wärmetauscher eingebracht werden können. Diese Bauweise ist ausgesprochen aufwendig und aus energetischen Gesichtspunkten uneffektiv. Die feste Verbindung der Wellrohrenden mit dem Deckel schafft Wärmebrücken und bewirkt Wärmeverluste. Zur Erreichung einer ausreichend großen Oberfläche ist eine Vielzahl einzelner U-förmig gebogener Wellrohrabschnitte in den Wärmetauscher einzubringen und jeweils an den Enden dicht zu befestigen. Hinzu kommt die Notwendigkeit, mit zusätzlichen Verteiler- bzw. Sammelleitungen für zu- bzw. abfließendes Medium zu arbeiten. Ein weiterer Nachteil besteht darin, dass ein solcher Wärmetauscher nur in vertikaler Anordnung einsetzbar ist.

Ein weiterer Vorschlag in DE 39 28 558 A1 sieht vor, eine Anzahl weitgehend geradlinig verlaufender Wellrohrabschnitte zwischen einem oberen und einem unteren Klemmblock zu führen, wobei der Klemmblock aus Einzelsegmenten besteht, die entweder an das Profil der Wellrohre angeglichen oder mit zusätzlichen Formschluss gebenden Bauelementen versehen sind. Auch nach diesem Vorschlag ist es notwendig, die Ein- und Ausgänge der einzelnen Leitungsabschnitte durch Verbindungsleitungen oder -räume untereinander zu verbinden.

Es ist deshalb Aufgabe der Erfindung, eine Anordnung zur Fixierung von Leitungen, insbesondere von Wellrohren zu schaffen, die leicht und einfach herstellbar ist, deren Abmessungen sich universell anpassen lassen, die zum Zweck der Vermeidung von Energieverlusten eine geringe Masse und nur minimierte Kontaktbereiche hat und im Übrigen für Leitungen aller Bauarten verwendet werden kann, insbesondere auch für thermisch belastete Leitungen und Fixierungen. Es ist ferner Aufgabe der Verbindung, Ausführungsformen einer solchen Anordnung vorzuschlagen, die es erlauben, eine Mehrzahl von Leitungen oder Abschnitten derselben beabstandet zueinander zu führen, zu sichern oder zu befestigen. Ebenso ist es Aufgabe der Erfindung, Verfahren zur Herstellung der Anordnung zur Fixierung von Leitungen und Verwendungsformen für die Anordnung zur Fixierung von Leitungen vorzuschlagen.

Nach der Erfindung wird dies erreicht mit einer Anordnung nach den Merkmalen des kennzeichnenden Teils des Patentanspruches 1 in Verbindung mit den Merkmalen des Oberbegriffs dieses Anspruches. Für das Verfahren wird dies erreicht mit den Arbeitsschritten gemäß dem Patentanspruch 9. Für die Verwendungsformen gemäß dem Patentanspruch 12. Nachgeordnete und Unteransprüche beschreiben weitere Ausführungsformen der Erfindung.

Nachstehend werden in der Beschreibung verwendete Begriffe mit folgendem Bedeutungsinhalt verwendet:
Leitung bezeichnet jede Art von Rohren oder Schläuchen zum Transport von Medien.
Wellrohr - bezeichnet eine Leitung, die aus beliebigen Werkstoffen erzeugt ist und deren Wand eine parallel oder eine schraubenförmig verlaufende Profilierung hat. Hierzu gehören auch aus Bandmaterial und gegebenenfalls weiteren Hilfsstoffen gewickelte Rohre oder Schläuche.
Halteeinrichtung bezeichnet ein Bauteil oder eine Baugruppe, das/die eine Leitung fixiert.

Erfindungsgemäß wird eine Anordnung zur Fixierung von Leitungen so ausgeführt sein, dass wenigstens eine Leitung in eine Halteeinrichtung, die keine Rohrschelle ist, eingelegt ist und bei der das Rohr mit seiner Mantelfläche an wenigstens einem Punkt mit der Halteeinrichtung Kontakt hat. Die Halteeinrichtung ist dabei so ausgelegt, dass sie die eingelegte Leitung aufnimmt und in wenigstens eine Richtung führt, sichert oder befestigt. Dies erfolgt im Regelfall durch das Eigengewicht der Leitung, durch das diese mit der Halteeinrichtung in Kontakt kommt.

Die genannte Halteeinrichtung kann so ausgeführt sein, dass ihre Öffnung eine kleinere Öffnungsweite a hat, als der Durchmesser der eingelegten Leitung beträgt. Die Halteeinrichtung besteht in diesem Fall vorzugsweise aus elastisch verformbaren Werkstoffen. Die Leitung wird in diesem Fall zusätzlich durch Formschluss geführt.

Eine Anordnung der oben beschriebenen Form kann auch so ausgeführt sein, dass sie wenigstens zwei in etwa parallel verlaufende Leitungen führt, sichert oder befestigt. Hierzu ist die Halteeinrichtung so ausgeführt, dass in einem festen Abstand je eine erste und wenigstens eine weitere Aufnahme für die Leitungen vorhanden sind.

Ferner kann eine Anordnung der oben beschriebenen Form so ausgeführt sein, dass die Leitung an mehreren Punkten ihres Umfangs mit der Halteeinrichtung Kontakt hat, während sie in der Ausnehmung der Halteeinrichtung liegt. Auch in diesem Fall legt die Halteeinrichtung die Leitung in wenigstens einer Richtung fest.

Eine weitere Ausführungsform der Anordnung sieht Ausnehmungen in der Halteeinrichtung vor, deren Öffnungsweite kleiner ist als der Durchmesser der zu fixierenden Leitung. Hierzu sind die die Öffnungsweite bestimmenden Bauteile der Halteeinrichtung vorzugsweise nachgiebig, sodass die Leitung in die Ausnehmung gedrückt werden kann. Sofern die Leitung flexibel ist, kann die Nachgiebigkeit der Halteeinrichtung auch entfallen.

Die Ausnehmung der Halteeinrichtung kann eine Innenkontur haben, die kreis-, linsen-, oval- oder u-förmig ist. Ebenso kann die Innenkontur ein Polygonzug oder dreieckförmig sein. Im letzteren Fall ergeben sich nur einzelne Berührungspunkte zwischen Leitung und Halteeinrichtung, weshalb beispielsweise ein unerwünschter Wärmeübergang durch eine solche Gestaltung zumindest vermindert werden kann.

Eine einfache Ausführungsform der Halteeinrichtung besteht darin, dass diese aus Flachmaterial, Draht oder streifenförmigen Teilen erzeugt ist, wobei diese ein Profil erhält, das einerseits die Konturen der Ausnehmungen wie oben beschrieben nachbildet und andererseits Zwischenabschnitte hat, die zur Herstellung eines notwendigen Abstandes dienen können.

Eine bevorzugte Form einer solchen Halteeinrichtung ist ein Drahtformteil mit einer mäanderförmigen Profilierung, wobei die Mäanderformen die oben beschriebenen sind.

Für eine einfache Handhabbarkeit können die Halteeinrichtungen entsprechende Elemente, wie Schlaufen, Ösen oder hakenförmige Biegungen besitzen. Damit ist eine Handhabung ebenso leicht möglich, wie die Befestigung an geeigneten Trägermedien.

Bei Halteeinrichtungen mit mäanderförmigen Profilen ist eine Gestaltung der Ausnehmungen vorteilhaft, bei der die Öffnung betragsmäßig kleiner ist als der Manteldurchmesser der Leitung. Diese muss mit erhöhtem Kraftaufwand in die Ausnehmung gedrückt werden und schnappt quasi in diese ein. Daraus ergibt sich eine Montageerleichterung und abhängig vom Einsatzfall eine einfache Installationsmöglichkeit. Die obenstehenden Ausführungsformen sind durch die Patentansprüche 1 bis 8 nicht abgedeckt.

Ein weiter verbesserter Form- und zugleich Kraftschluss ergibt sich bei einer Ausführungsform, bei der die Halteeinrichtung zusätzlich durch eine Verriegelung ergänzt ist. Die Erfindung sieht deshalb vor, dass durch die mäanderförmig profilierte Halteeinrichtung nach dem Einbringen der Leitungen alternierend zwischen den Mäandern ein stab-, streifen- oder drahtförmiges Befestigungsteil gezogen wird, durch das die bis dahin offenen Ausnehmungen verschlossen werden und die eingebrachten Leitungen vollständigen Formschluss in der Halteeinrichtung haben. Diese besitzen danach in radialer Richtung keinen Freiheitsgrad mehr. Werden die oben beschriebenen Halteeinrichtungen in einer von der Waagerechten abweichenden Lage verwendet, sodass die Leitungen nicht mehr durch ihr Eigengewicht in der Halteeinrichtung verbleiben würden, kann diese Art der Fixierung eingesetzt werden.

Das stab-, streifen- oder drahtförmige Bauteil kann nach dem Einziehen an einem oder beiden Enden abgewinkelt oder auch mit der Halteeinrichtung verdrillt werden. Dadurch werden ungewollte Verschiebungen des Befestigungsteils nach der Montage vermieden. Das Befestigungsteil kann an einer Seite auch schon vor dem Einziehen abgewinkelt sein.

Die oben beschriebenen Halteeinrichtungen und die möglichen Arten der Fixierung sind vorteilhaft dann einsetzbar, wenn die zu fixierende Leitung ein Wellrohr oder -schlauch ist. Deren Rippenprofil ermöglicht es, die Halteeinrichtung so auszulegen, dass sie in ein Wellental eingreift. Auf diese Weise kann neben der radialen auch eine axiale Fixierung der Leitung erreicht werden.

Es ist nicht erforderlich, dass eine Mehrzahl von Leitungen in die Halteeinrichtung eingelegt wird. Vielmehr ist diese auch geeignet, eine einzelne spiralförmig verlaufende und/oder eine zylinderförmig gewickelte Leitung so zu fixieren, dass die Spirale und/oder die Zylinderwindungen im nötigen Abstand gehalten werden.

Besonders vorteilhaft ist dabei die Verwendung mehrerer an sich gleicher Halteeinrichtungen zur Fixierung einer Spirale oder eines Zylinderwickels.

Die allgemein bevorzugte Ausführungsform der Anordnung dient der Fixierung von Wellrohren in der Weise, dass für die Halteeinrichtung ein Bauteil verwendet wird, das sich in wenigstens ein Wellental legen kann und dadurch die Leitung auch in axialer Richtung führt.

Die entsprechende Halteeinrichtung kann wie oben beschrieben auch mehrere Wellrohrleitungen oder spiralförmig verlaufende Wellrohrleitungen beabstandet zueinander halten.

Zur Fixierung von Leitungen in einer Anordnung der oben beschriebenen Art besteht das erfindungsgemäße Verfahren darin, dass eine Leitung in einem ersten Verfahrensschritt in eine Halteeinrichtung eingelegt wird.

Die Halteeinrichtung ist so ausgebildet, dass die Öffnungsweite a kleiner ist, als der kleinste Durchmesser der einzulegenden Leitung, sodass bei der Ausführung des ersten Verfahrensschrittes ein Einschnappvorgang stattfindet und die Leitung anschließend in der Halteeinrichtung durch Formschluss zusätzlich gehalten ist.

Ist die Leitung ein sogenanntes Wellrohr, ergibt sich daraus zugleich auch eine axiale Fixierung zwischen Halteeinrichtung und Leitung, indem die Halteeinrichtung jeweils in einem Wellental des Wellrohres liegt.

Ein weiterer Verfahrensschritt besteht darin, dass nach dem Einlegen der Leitung in die Halteeinrichtung ein Befestigungsbauteil so durch die Halteeinrichtung geführt wird, dass einerseits die Öffnung der Halteeinrichtung verschlossen wird und andererseits eine seitliche Verschiebung des Befestigungsteils weitgehend ausgeschlossen ist. Um dies zu erreichen, ist die Halteeinrichtung vorzugsweise mäanderförmig gebogen und lässt ein Einflechten des Befestigungsteils zu.

Eine weitere Ausgestaltungsform des Verfahrens sieht vor, dass nach dem Einbringen des Befestigungsteils in die Halteeinrichtung wenigstens ein überstehendes Ende des Befestigungsteils seitlich gebogen wird und damit eine nachträgliche Verschiebung unmöglich wird. Es ist ebenso möglich, wenigstens ein überstehendes Ende des Befestigungsteils mit der Halteeinrichtung zu verdrillen.

Das erfindungsgemäße Verfahren kann ebenso wie die Halteeinrichtung an sich bei der Fixierung einzelner oder einer Mehrzahl nebeneinander verlaufender Leitungen verwendet werden.

Halteeinrichtung und Verfahren werden insbesondere dann verwendet, wenn mehrere nebeneinanderliegende und auf einen bestimmten Abstand zueinander einzustellende Leitungen fixiert werden müssen. Insbesondere wird diese Möglichkeit verwendet, um bei einer spiralförmig verlaufenden Leitung die einzelnen Spiralen gegeneinander zu fixieren. Ebenso dann, wenn zylinderförmig gewickelte Leitungen auf einen bestimmten Abstand einzustellen und der entstehende Wickel insgesamt zu fixieren ist.

Die vorgenannten Anordnungen und Verfahren zu deren Herstellung finden deshalb insbesondere Verwendung, wenn Leitungsbündel in Behälter einzubringen sind, was insbesondere bei Wärmetauschern der Fall ist.

Die Erfindung wird nachstehend anhand von Ausführungsbeispielen näher erläutert. Dabei zeigen:
**Fig. 1** **-** das Prinzip der erfindungsgemäßen Halteeinrichtung in Verbindung mit einer Öse zur Schraubbefestigung;
**Fig. 2** **-** die Halteeinrichtung in einer um 90° im Uhrzeigersinn gedrehten Darstellung in Verbindung mit einem eingelegten Wellrohr;
**Fig. 3** **-** eine Ausführungsform der Halteeinrichtung für die Verwendung mit einem spiralgewellten Wellrohr;
**Fig. 4** **-** eine Ausführungsform einer mäanderförmig gebogenen Halteeinrichtung mit einer Schlaufe;

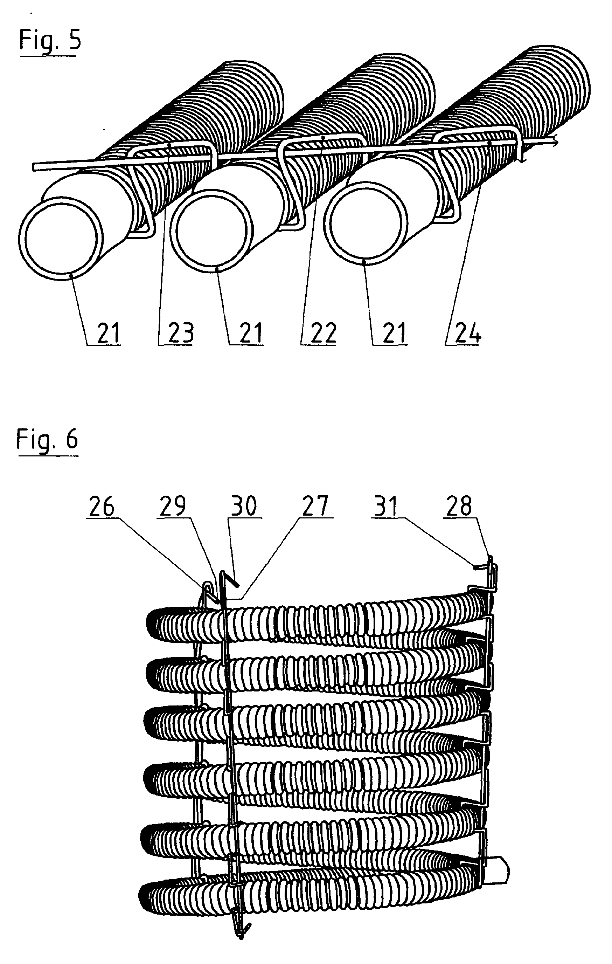

**Fig. 5** **-** eine Anordnung aus drei nebeneinander angeordneten Leitungen, einer Halteeinrichtung und einem Bauteil zur Sicherung;
**Fig. 6** **-** eine Anordnung mit einer zylinderförmig aufgewickelten Leitung und drei verteilt angeordneten Halteeinrichtungen.

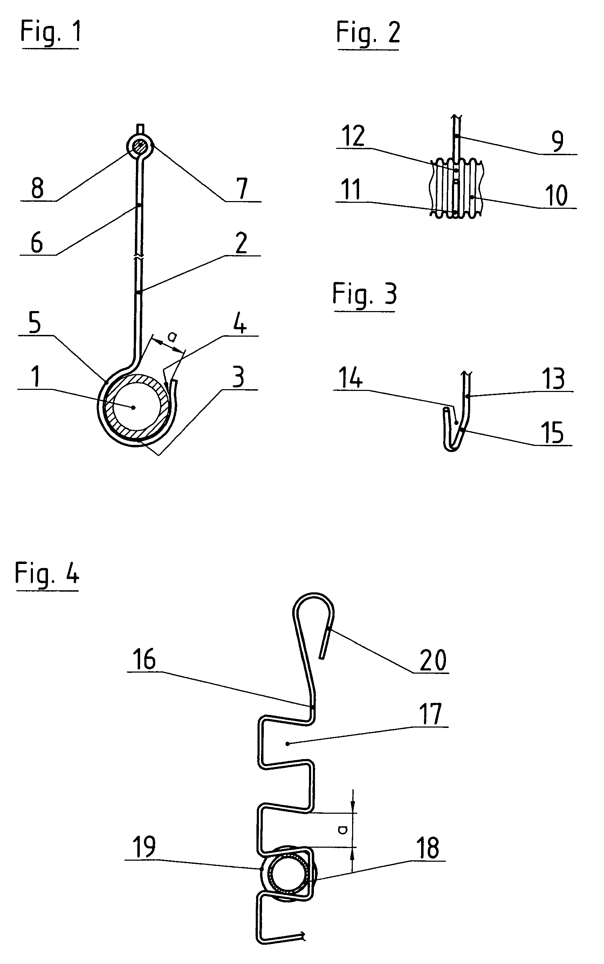

Eine Anordnung, bestehend aus einer Leitung (1) und einer Halteeinrichtung (2) ist so ausgeführt, dass die Leitung (1) an einem Punkt (3) mit der Halteeinrichtung (2) Kontakt hat und dabei in einer Ausnehmung (4) der Halteeinrichtung (2) liegt. Die Leitung (1) ist dabei in wenigstens einer Richtung festgelegt. Die Halteeinrichtung (2) besteht beispielhaft aus einem Bügel (5), einer Verlängerung (6) und einer Öse (7), in der ein an sich beliebiges Befestigungsteil (8) angeordnet sein kann. Die Öffnungsweite a des Bügels (5) ist in jedem Fall kleiner als der Außendurchmesser der Leitung (1). Diese Ausführungsform und deren Darstellung in Fig. 1 ist nicht durch die Patentansprüche abgedeckt.

Eine Halteeinrichtung (9) nimmt ein Wellrohr (10) mit seiner Schlaufe (11) auf, wobei das Wellental (12) des Wellrohres (10) mit der Schlaufe (11) im Kontakt ist. Diese Ausführungsform und deren Darstellung in Fig. 2 ist nicht durch die Patentansprüche abgedeckt.

Eine Halteeinrichtung (13) für die vorzugsweise Verwendung mit einem spiralgewellten Wellrohr ist so ausgeführt, dass dessen Schlaufe (14) in einer ersten Biegung (15) so gegenüber der Lotrechten abgewinkelt ist, dass die Schlaufe (14) den gleichen Steigungswinkel wie das Wellental des einzulegenden Wellrohres, das in Fig. 3 nicht dargestellt ist, hat. Diese Ausführungsform und deren Darstellung in Fig. 3 ist nicht durch die Patentansprüche abgedeckt.

Eine Halteeinrichtung (16) besteht aus einer Anzahl mäanderförmiger Biegungen (17), die vorwiegend einen Trapezquerschnitt mit einer Öffnungsweite a haben, die kleiner ist, als der Manteldurchmesser (18) der einzulegenden Leitung (19) und dadurch in die Halteeinrichtung einschnappt. Am oberen Ende der Halteeinrichtung ist eine Schlaufe (20) angeordnet, die auch durch einen Haken, eine Öse oder dergleichen ersetzt sein kann.

Eine Anordnung aus drei Wellrohren (21) liegt in einer Halteeinrichtung (22) und ist dadurch gegen seitliches Verrutschen und Abstandsänderungen gegeneinander gesichert. Die zwischen den Ausformungen zur Aufnahme der Wellrohre (21) vorhandenen Distanzstücke (23) der Halteeinrichtung (22) nehmen ein Befestigungsteil (24) in der Weise auf, dass es wechselweise durch die vorhandenen Schlaufen gezogen ist und die vorhandenen Distanzstücke (23) eine Bewegung des Befestigungsteils (24) in vertikale Richtung verhindern. Die Wellrohre (21) sind zugleich formschlüssig in den Ausnehmungen der Halteeinrichtung (22) gehalten.

Ein zylinderförmiger Wickel (25) besteht aus einer Wellrohrleitung, die in einem im Wesentlichen gleichbleibenden Durchmesser und Abstand der einzelnen Windungen zueinander angeordnet sein soll. Halteeinrichtungen (26), (27) und (28) sind in den Wickel (25) eingedrückt und fixieren diesen. In die Halteeinrichtung (26) ist ein Sicherungsbauteil (29), in die Halteeinrichtung (27) ein Sicherungsbauteil (30) und in die Halteeinrichtung (28) ein Sicherungsbauteil (31) eingezogen, sodass der Wickel dimensionsstabil gehalten ist. Die Anzahl der bei gewickelten oder spiralförmig gewickelten Leitungen verwendeten Halteeinrichtungen kann variieren.

Das erfindungsgemäße Verfahren besteht im ersten Verfahrensschritt darin, dass eine Leitung (1) in eine Halteeinrichtung (2) eingelegt wird.

Die Öffnungsweite a der Halteeinrichtung (2) ist dabei so gewählt, dass sie betragsmäßig kleiner ist, als der kleinste Durchmesser einer Leitung (1; 19) oder eines Wellrohres (10). Damit ergibt sich ein Einschnappvorgang, durch den die Leitung (1; 19) oder das Wellrohr (10) formschlüssig gehalten ist.

Auf die gleiche Weise wird die Leitung (19) auch in die mäanderförmig gebogene Halteeinrichtung (16; 26; 27; 28) eingelegt.

In einem weiteren Verfahrensschritt wird in die Halteeinrichtung (1; 9; 13; 16; 22; 26; 27; 28) ein Befestigungsteil (8; 24; 29; 30; 31) in der Weise eingeschoben, dass es mit entsprechenden Elementen der Halteeinrichtung (1; 9; 13; 16; 22; 26; 27; 28) wechselseitig im Eingriff ist und dadurch einerseits formschlüssig gehalten wird und ein seitliches Verschieben ausgeschlossen ist, sodass die eingelegten Leitungen nicht mehr aus ihrer Halterung herausrutschen können. Weiterhin kann das Befestigungsteil (8, 24, 29, 30, 31) an seinem überstehenden Enden seitlich abgebogen oder mit der Halteeinrichtung (1, 9, 13, 16, 22, 26, 27, 28) verdrillt werden. Dadurch wird eine ungewollte Verschiebung vermieden.

Die erfindungsgemäße Anordnung und das erfindungsgemäße Verfahren werden insbesondere eingesetzt, wenn nebeneinander verlaufende Leitungen oder Leitungsabschnitte gegeneinander fixiert werden müssen. So kann eine Mehrzahl nebeneinander verlaufende Leitungen ebenso fixiert werden, wie die nebeneinander verlaufenden Leitungsabschnitte einer spiralförmig verlaufenden einzelnen Leitung. Ebenso können zylinderförmige Wickel durch die erfindungsgemäße Anordnung fixiert werden. Selbst mehrfach übereinander oder ineinander verschachtelte Wickel oder Sonderformen können durch eine Mehrzahl Anordnungen so gegeneinander fixiert werden, dass eine ausreichende Lagesicherung gewährleistet ist.

Die erfindungsgemäße Anordnung und das zugehörige Verfahren erlauben es deshalb im Besonderen, in Behälter einzubringende Leitungen gegeneinander sowie innerhalb des Behälters so zu fixieren, dass beispielsweise Berührungen der Behälterwände ausgeschlossen werden.

Die Erfindung hat also den Vorteil, dass mit geringem Aufwand Leitungen fixiert werden können, wobei insbesondere bei Verwendung im Zusammenwirken mit Wellrohren auch eine axiale Sicherung mit der erfindungsgemäßen Anordnung erreicht wird.

### Bezugszeichenliste

- 1: Leitung
- 2: Halteeinrichtung
- 3: Punkt der Halteeinrichtung [2]
- 4: Ausnehmung der Halteeinrichtung [2]
- 5: Bügel
- 6: Verlängerung
- 7: Öse
- 8: Befestigungsteil
- 9: Halteeinrichtung
- 10: Wellrohr
- 11: Schlaufe
- 12: Wellental
- 13: Halteeinrichtung
- 14: Schlaufe
- 15: Biegung
- 16: Halteeinrichtung
- 17: Mäanderförmige Biegung
- 18: Manteldurchmesser
- 19: Leitung
- 20: Schlaufe
- 21: Wellrohre
- 22: Halteeinrichtung
- 23: Distanzstücke
- 24: Befestigungsteil
- 25: Zylinderförmiger Wickel
- 26: Halteeinrichtung
- 27: Halteeinrichtung
- 28: Halteeinrichtung
- 29: Sicherungsbauteil
- 30: Sicherungsbauteil
- 31: Sicherungsbauteil

## Patentansprüche

1. Anordnung zur Fixierung von Leitungen, wenigstens bestehend aus einer Leitung (19) oder einem Wellrohr (10)
und einer Halteeinrichtung (16, 22, 26, 27, 28),
wobei die Leitung (19) oder das Wellrohr (10) mit wenigstens einem Punkt (3) ihrer Mantelfläche mit der Halteeinrichtung (16, 22, 26, 27, 28) Kontakt hat und in einer mäanderförmigen Biegung (17) derselben liegt und die Halteeinrichtung (16, 22, 26, 27, 28) die Leitung (19) oder das Wellrohr (10) in wenigstens einer Richtung festlegt,
**dadurch gekennzeichnet, dass**
die Halteeinrichtung (16, 22, 26, 27, 28) ein draht- oder streifenförmiges Bauteil mit durch Biegung erzeugten Ausnehmungen ist,
die mäanderförmige Biegung (17) durch wechselseitige Biegungen der Halteeinrichtung (16) ausgeformt sind und die Tiefe der mäanderförmigen Biegung (17) größer ist als der Durchmesser (18) der Leitung an der Befestigungsstelle,
durch die mäanderförmigen Biegungen (17) der Halteeinrichtung (16, 26, 27, 28) nach dem Einlegen der Leitung (19) oder des Wellrohres (10) ein stab-, streifen- oder drahtförmiges Befestigungsteil (24) oder Sicherungsbauteil (29, 30, 31) in der Art zusätzlich eingeschoben ist, dass es alternierend durch die Biegungen der Halteeinrichtung geschoben ist, die verbliebenen Öffnungen der mäanderförmigen Biegungen (17) verschließt und die Leitung (19) oder das Wellrohr (10) in radialer Richtung keinen Freiheitsgrad mehr haben.

2. Anordnung zur Fixierung von Leitungen nach Patentanspruch 1,
**dadurch gekennzeichnet, dass**
die Leitung (19) oder das Wellrohr (10) an mehreren Punkten ihrer Mantelfläche oder an einem Teil ihres Umfangs mit der Halteeinrichtung Kontakt haben und in einer mäanderförmigen Biegung (17) der Halteeinrichtung liegt, wobei die Halteeinrichtung (16, 22, 26, 27, 28) die Leitung in wenigstens einer Richtung festlegt.

3. Anordnung zur Fixierung von Leitungen nach einem der Patentansprüche 1 oder 2,
**dadurch gekennzeichnet, dass**
die mäanderförmige Biegung (17) der Halteeinrichtung (16, 22, 26, 27, 28) eine Öffnungsweite (a) hat, die kleiner ist als der Manteldurchmesser (18) der Leitung an der Befestigungsstelle.

4. Anordnung zur Fixierung von Leitungen nach einem der Patentansprüche 1 bis 3,
**dadurch gekennzeichnet, dass**
die mäanderförmige Biegung (17) eine Innenkontur hat, die kreisbogen-, oval-, linsen- oder u-förmig, ein Polygonzug oder dreieckförmig ist.

5. Anordnung zur Fixierung von Leitungen nach Patentanspruch 4,
**dadurch gekennzeichnet, dass**
die Halteeinrichtung (16, 22, 26, 27, 28) an wenigstens einem Ende eine Öse (7) und/oder eine hakenförmige Biegung hat.

6. Anordnung zur Fixierung von Leitungen nach einem der Patentansprüche 1 bis 5,
**dadurch gekennzeichnet, dass**
die Leitung (19) ein Wellrohr und/oder -schlauch (10, 21) mit einem parallel oder spiralförmig gewellten Mantel ist.

7. Anordnung zur Fixierung von Leitungen nach einem der Patentansprüche 1 bis 6,
**dadurch gekennzeichnet, dass**
die Leitung (19) spiral- und/oder zylinderförmig gewickelt ist, die Halteeinrichtung (16, 22, 26, 27, 28) die Leitung in ihren mäanderförmigen Biegungen (17) mehrfach aufnimmt und auf Distanz hält.

8. Anordnung zur Fixierung von Leitungen nach Patentanspruch 7,
**dadurch gekennzeichnet, dass**
der Leitung (19) oder dem Wellrohr (10) mehrere Halteeinrichtungen zugeordnet sind.

9. Verfahren zur Fixierung von Leitungen in einer Anordnung zur Fixierung von Leitungen nach den Patentansprüchen 1 bis 8,
**dadurch gekennzeichnet, dass**
eine Leitung (19), ein Wellrohr (10) oder Wellrohre (21) in mäanderförmigen Biegungen (17) einer Halteeinrichtung (16; 26; 27; 28) eingedrückt wird und der kleinste Durchmesser der Leitung (19), des Wellrohrs (10) oder der Wellrohre (21) größer ist, als die Öffnungsweite (a) der mäanderförmigen Biegung (17) und
ein Befestigungsteil (24) durch die Distanzstücke (23) der Halteeinrichtung (22) geschoben wird.

10. Verfahren zur Fixierung von Leitungen nach Patentanspruch 9,
**dadurch gekennzeichnet, dass**
das Befestigungsteil (24) an seinem überstehenden Ende seitlich abgewinkelt wird.

11. Verfahren zur Fixierung von Leitungen nach Patentanspruch 10,
**dadurch gekennzeichnet, dass**
das Befestigungsteil (24) mit der Halteeinrichtung (22) verdrillt wird.

12. Verwendung einer Anordnung zur Fixierung von Leitungen nach einem der Patentansprüche 1 bis 8,
**dadurch gekennzeichnet, dass**
die Anordnung zur Fixierung einer oder mehrerer nebeneinander verlaufender Leitungen
und/oder zur Fixierung des Abstandes zwischen Teilen einer oder mehrerer spiralförmig oder zylinderförmig gewickelter Leitungen
und/oder zur Fixierung verschiedener gewickelter Leitungen gegeneinander Verwendung findet.

## Claims

1. An assembly for fixing pipes, at least consisting of
a pipe (19) or a corrugated pipe (10)
and a holding device (16, 22, 26, 27, 28),
wherein the pipe (19) or the corrugated pipe (10), with at least one point (3) of its surface shell, is in contact with the holding device (16, 22, 26, 27, 28) and lies in a meander-shaped bend (17) thereof,
and the holding device (16, 22, 26, 27, 28) fixes the pipe (19) or the corrugated pipe (10) in at least one direction,
**characterized in that**
the holding device (16, 22, 26, 27, 28) is a wire- or strip-shaped component that has recesses produced by bending,
the meander-shaped bend (17) is formed by alternating bends of the holding device (16), and the depth of the meander-shaped bend (17) is greater than the diameter (18) of the pipe at the fastening point,
after inserting the pipe (19) or the corrugated pipe (10), a rod-, strip- or wire-shaped fastening part (24) or securing component (29, 30, 31) is additionally slid through the meander-shaped bends (17) of the holding device (16, 26, 27, 28) in such a manner that it is slid alternately through the bends of the holding device, closes the remaining openings of the meander-shaped bends (17), and the pipe (19) or the corrugated pipe (10) has no longer a degree of freedom in the radial direction.

2. The assembly for fixing pipes according to patent claim 1,
**characterized in that**
the pipe (19) or the corrugated pipe (10) has contact at a plurality of points of its shell surface or at a portion of its circumference with the holding device and lies in a meander-shaped bend (17) of the holding device, wherein the holding device (16, 22, 26, 27, 28) fixes the pipe in at least one direction.

3. The assembly for fixing pipes according to patent claim 1 or 2,
**characterized in that**
the meander-shaped bend (17) of the holding device (16, 22, 26, 27, 28) has an opening width (a) that is smaller than the shell diameter (18) of the pipe at the fastening point.

4. The assembly for fixing pipes according to any one of the patent claims 1 to 3,
**characterized in that**
the meander-shaped bend (17) has an inner contour that is circular-arc-shaped, ovally-shaped, lenticular or U-shaped, a polygon line or triangular.

5. The assembly for fixing pipes according to patent claim 4,
**characterized in that**
the holding device (16, 22, 26, 27, 28), at least at one end, has an eye (7) and/or a hook-shaped bend.

6. The assembly for fixing pipes according to any one of the patent claims 1 to 5,
**characterized in that**
the pipe (19) is a corrugated pipe and/or corrugated hose (10, 21) having a shell that is corrugated in a parallel or spirally manner.

7. The assembly for fixing pipes according to any one of the patent claims 1 to 6,
**characterized in that**
the pipe (19) is wound in a spiral- and/or cylinder-shaped manner, and that the holding device (16, 22, 26, 27, 28), in its the meander-shaped bends (17), accommodates the pipe multiple times and keeps the pipe at a distance.

8. The assembly for fixing pipes according to patent claim 7,
**characterized in that**
a plurality of holding devices are associated with the pipe (19) or the corrugated pipe (10).

9. A method for fixing pipes in an assembly for fixing pipes according to the patent claims 1 to 8,
**characterized in that**
a pipe (19), a corrugated pipe (10) or corrugated pipes (21) is pressed into meander-shaped bends (17) of a holding device (16; 26; 27; 28), and the smallest diameter of the pipe (19), of the corrugated pipe (10) or the corrugated pipes (21) is larger than the opening width (a) of the meander-shaped bend (17) and a fastening part (24) is slid through spacers (23) of the holding device (22).

10. The method for fixing pipes according to patent claim 9,
**characterized in that**
the fastening part (24) is bent to the side at its protruding end.

11. The method for fixing pipes according to patent claim 10,
**characterized in that**
the fastening part (24) is twisted together with the holding device (22).

12. Use of an assembly for fixing pipes according to any one of the patent claims 1 to 8,
**characterized in that**
the assembly is used for fixing one or more pipes running next to one another,
and/or for fixing the distance between parts of one or more spirally or cylindrically wound pipes,
and/or for fixing different wound pipes with respect to one another.

## Revendications

1. Arrangement pour la fixation de conduites, composé d'au moins
une conduite (19) ou d'un tube ondulé (10)
et d'un dispositif de maintien (16, 22, 26, 27, 28)
dans lequel la conduite (19) ou le tube ondulé (10) se trouve en contact avec le dispositif de maintien (16, 22, 26, 27, 28) par au moins un point (3) de sa surface extérieure et se situe dans une courbure en forme de méandre (17) de celui-ci,
et le dispositif de maintien (16, 22, 26, 27, 28) fixe la conduite (19) ou le tube ondulé (10) dans au moins une direction,
**caractérisé en ce que**
le dispositif de maintien (16, 22, 26, 27, 28) est une pièce en forme de fil ou de bande avec des évidements formés par courbure,
la courbure en forme de méandre (17) est formée par des courbures sur des côtés opposés du dispositif de maintien (16), et la profondeur de la courbure en forme de méandre (17) est supérieure au diamètre (18) de la conduite au niveau du point de fixation,
une pièce de fixation (24) ou une pièce de blocage (29, 30, 31) en forme de tige, de bande ou de fil est en outre insérée dans les courbures en forme de méandres (17) du dispositif de maintien (16, 26, 27, 28) après l'insertion de la conduite (19) ou du tube ondulé (10), de manière à être poussée alternativement à travers les courbures du dispositif de maintien, fermant ainsi les ouvertures restantes des courbures en forme de méandres (17), et de sorte que la conduite (19) ou le tube ondulé (10) n'ont plus de degré de liberté dans la direction radiale.

2. Arrangement pour la fixation de conduites selon la revendication 1,
**caractérisé en ce que**
la conduite (19) ou le tube ondulé (10) se trouve en contact avec le dispositif de maintien au niveau de plusieurs points de sa surface extérieure ou sur une partie de son pourtour et se situe dans une courbure en forme de méandre (17) du dispositif de maintien, le dispositif de maintien (16, 22, 26, 27, 28) fixant la conduite dans au moins une direction.

3. Arrangement pour la fixation de conduites selon l'une des revendications 1 ou 2,
**caractérisé en ce que**
la courbure en forme de méandre (17) du dispositif de maintien (16, 22, 26, 27, 28) possède une largeur d'ouverture (a) inférieure au diamètre d'enveloppe (18) de la conduite au niveau du point de fixation.

4. Arrangement pour la fixation de conduites selon l'une des revendications 1 à 3,
**caractérisé en ce que**
la courbure en forme de méandre (17) possède un contour intérieur présentant une forme d'arc de cercle, ovale, de lentille ou de U, polygonale ou triangulaire.

5. Arrangement pour la fixation de conduites selon la revendication 4,
**caractérisé en ce que**
le dispositif de maintien (16, 22, 26, 27, 28) possède un oeillet (7) et/ou une courbure en forme de crochet à au moins une extrémité.

6. Arrangement pour la fixation de conduites selon l'une des revendications 1 à 5,
**caractérisé en ce que**
la conduite (19) est un tube ondulé et/ou un tuyau ondulé (10, 21) avec une enveloppe ondulée de façon parallèle ou en forme de spirale.

7. Arrangement pour la fixation de conduites selon l'une des revendications 1 à 6,
**caractérisé en ce que**
la conduite (19) est torsadée en forme de spirale et/ou de cylindre, le dispositif de maintien (16, 22, 26, 27, 28) reçoit plusieurs fois la conduite dans ses courbures en forme de méandres (17) et la maintient à distance.

8. Arrangement pour la fixation de conduites selon la revendication 7,
**caractérisé en ce que**
plusieurs dispositifs de maintien sont attribués à la conduite (19) ou au tube ondulé (10).

9. Procédé pour la fixation de conduites dans un arrangement pour la fixation de conduites selon les revendications 1 à 8,
**caractérisé en ce que**
une conduite (19), un tube ondulé (10) ou des tubes ondulés (21) sont enfoncés dans des courbures en forme de méandres (17) d'un dispositif de maintien (16 ; 26 ; 27 ; 28), et le plus petit diamètre de la conduite (19), du tube ondulé (10) ou des tubes ondulés (21) est supérieur à la largeur d'ouverture (a) de la courbure en forme de méandre (17), et
une pièce de fixation (24) est poussée à travers les pièces d'écartement (23) du dispositif de maintien (22).

10. Procédé pour la fixation de conduites selon la revendication 9,
**caractérisé en ce que**
la pièce de fixation (24) est coudée latéralement à son extrémité qui dépasse.

11. Procédé pour la fixation de conduites selon la revendication 10,
**caractérisé en ce que**
la pièce de fixation (24) est torsadée avec le dispositif de maintien (22).

12. Utilisation d'un arrangement pour la fixation de conduites selon l'une des revendications 1 à 8,
**caractérisée en ce que**
l'arrangement est utilisé pour la fixation d'une ou de plusieurs conduites adjacentes
et/ou pour la fixation de l'espacement entre des parties d'une ou de plusieurs conduites torsadées en forme de spirale ou de cylindre
et/ou pour la fixation de différentes conduites torsadées les unes contre les autres.
